# DEMANDE DE BREVET EUROPEEN

(11) **EP 1 354 756 A1**
(43) Date de publication de la demande: **22.10.2003**
(21) Numéro de dépôt: 03290666.1
(22) Date de dépôt: 17.03.2003
(51) Int. Cl.: B60N 2/48, F16B 21/16

(54) **Systeme de replacement et de blocage en translation d'une tige, notamment pour appui-tete de vehicule automobile**

(30) Priorité: 17.04.2002 FR 0204806
(71) Demandeur: Centre d'Etude et de Recherche pour l'Automobile ( CERA), 51100 Reims (FR)
(72) Inventeur: Cayzac, Patrick, 51100 Reims (FR)
(74) Mandataire: Geismar, Thierry

(57) **Abrégé**

L'invention concerne un système (1) de déplacement et de blocage en translation d'une tige (2) pourvue d'un premier (3) et d'un deuxième (4) logements décalés axialement et s'étendant de part et d'autre de l'axe de la tige (2), ledit système (1) comprenant :
- une gaine (5) destinée à recevoir en translation la tige (2) ;
- une première pièce (12) associée à la gaine (5) de façon mobile ;
- un premier moyen de blocage (33) destiné à venir s'engager dans le premier logement (3);
- une deuxième pièce (14) mobile par rapport à la première pièce (12) ;
- un deuxième moyen de blocage (34) destiné à venir s'engager dans le deuxième logement (4) ;
- un moyen de contrainte (32) du déplacement relatif des première (12) et deuxième (14) pièces.

L'invention concerne aussi l'application d'un tel système au blocage d'une tige (2) dans deux positions extrêmes.

## Description

L'invention concerne un système de déplacement et de blocage en translation d'une tige pourvue d'un premier et d'un deuxième logements décalés axialement et s'étendant de part et d'autre de l'axe de la tige, ainsi que l'application d'un tel système au blocage d'une tige dans deux positions extrêmes définies par les deux logements.

Ce système est plus particulièrement destiné au réglage en hauteur d'appuis-tête de siège, notamment de véhicule automobile. De tels appuis-tête ont pour fonction principale d'assurer la sécurité des passagers, tout en leur assurant un confort.

Concernant leur fonction de sécurité, ces appuis-tête doivent respecter des normes de réglementation strictes. En particulier, ces normes imposent que, d'une part, un dispositif anti-extraction de l'appui-tête soit prévu, et que, d'autre part, le déplacement de l'appui-tête vers le bas soit limité à une certaine cote, et ce pour le conserver en position de sécurité même en cas de choc ou de manoeuvre involontaire, par exemple lorsqu'un passager appuie sur l'appui-tête.

Les appuis-tête pour véhicules automobiles comprennent généralement un coussin d'appui monté dans le dossier du siège par l'intermédiaire de deux tiges montées coulissantes respectivement dans une gaine qui est prévue soit dans le dossier soit dans l'appui-tête.

Pour répondre aux normes de sécurité mentionnées ci-dessus, on connaît déjà des appuis-tête dont une tige est pourvue d'un dispositif anti-extraction, et dont l'autre tige est pourvue d'un dispositif destiné au blocage de la translation vers le bas.

Une telle solution présente l'inconvénient de nécessiter deux gaines spécifiques, ce qui augmente le coût de mise en conformité avec les exigences de sécurité susmentionnées.

Pour remédier à ces inconvénients, l'invention propose un système de déplacement et de blocage en translation d'une tige remplissant à la fois une fonction anti-extraction, et une fonction de blocage en translation de la tige vers le bas.

Les normes de sécurité imposées sont par conséquent respectées, et ce par un système simple, présentant un nombre de pièces limité. Le montage d'un tel système ainsi que son utilisation en sont donc facilités, et les coûts de fabrication d'un appui-tête équipé d'un tel système en sont également réduits.

En outre, ce système est compatible avec, ou permet le réglage en hauteur de l'appui-tête par le passager entre la position « d'anti-extraction » et la position de « hauteur minimale ». Ce réglage en hauteur permet d'une part d'assurer le confort de l'utilisateur, en lui permettant de placer aisément l'appui-tête dans la position souhaitée, et d'autre part de satisfaire aux exigences de sécurité imposant que l'appui-tête, en position d'utilisation, soit fermement maintenu dans la position dans laquelle il a été réglé, en cas de choc ou de manoeuvre involontaire.

A cet effet, et selon un premier aspect, l'invention propose un système de déplacement et de blocage en translation d'une tige pourvue d'un premier et d'un deuxième logements décalés axialement et s'étendant de part et d'autre de l'axe de la tige, ledit système comprenant :
- une gaine destinée à recevoir en translation la tige suivant un axe Z sensiblement colinéaire à l'axe de la tige ;
- une première pièce associée à la gaine de façon mobile suivant un axe X perpendiculaire à l'axe Z, ladite pièce étant agencée pour recevoir la tige en translation ;
- un premier moyen de blocage s'étendant suivant un axe Y formant un trièdre avec les axes X et Z, et destiné à venir s'engager dans le premier logement, ledit moyen étant associé à la première pièce ;
- une deuxième pièce mobile par rapport à la première pièce suivant l'axe X, ladite deuxième pièce étant agencée pour recevoir la tige en translation ;
- un deuxième moyen de blocage s'étendant suivant l'axe Y et destiné à venir s'engager dans le deuxième logement, ledit moyen étant associé à la deuxième pièce, ladite deuxième pièce étant disposée sur la première pièce de sorte que les deux moyens de blocage soient disposés de part et d'autre de l'axe Z ;
- un moyen de contrainte du déplacement relatif des première et deuxième pièces qui est agencé pour provoquer le déplacement sélectif de l'une des deux pièces lorsque le moyen de blocage de ladite pièce est en regard du logement dans lequel il est destiné à s'engager.

Selon un deuxième aspect, l'invention propose l'application d'un tel système au blocage d'une tige dans deux positions extrêmes définies par les deux logements, ladite tige pouvant coulisser entre ces deux positions extrêmes par déplacement manuel.

D'autres objets et avantages de l'invention apparaîtront au cours de la description qui suit, faite en référence aux dessins annexés dans lesquels :
- les figures 1, 2 et 3 sont des vues éclatées d'un système de déplacement et de blocage en translation d'une tige, respectivement selon un premier, un deuxième, et un troisième mode de réalisation ;
- les figures 4 et 5 sont des vues en coupe d'une tige respectivement selon un premier et un deuxième mode de réalisation, ladite tige étant utilisable avec le système selon l'invention ;
- les figures 6a et 6b, 8a et 8b, 10a et 10b, 12a et 12b sont des vues en coupe longitudinale (indice a) et des vues en coupe de dessus (indice b) du système de la figure 1, dans lequel la tige de la figure 5 est insérée, ladite tige étant respectivement dans une première position extrême (figures 6a et 6b), dans une position intermédiaire (figures 8a et 8b), dans une deuxième position extrême (figures 10a et 10b, figures 12a et 12b), les figures 12a et 12b montrant un outil permettant de désengager la tige de ladite position;
- les figures 7a et 7b, 9a et 9b, 11a et 11b, 13a et 13b sont des vues identiques respectivement à celles des figures 6a et 6b, 8a et 8b, 10a et 10b et 12a et 12b, pour le système de la figure 2,
- les figures 14a et 14b sont des vues en perspective du système de la figure 3, permettant à la tige de prendre respectivement une position intermédiaire entre ses deux positions extrêmes, et l'une de ses positions extrêmes.

Le système 1 selon l'invention est destiné à permettre le déplacement et le blocage en translation d'une tige 2 pourvue d'un premier 3 et d'un deuxième 4 logements.

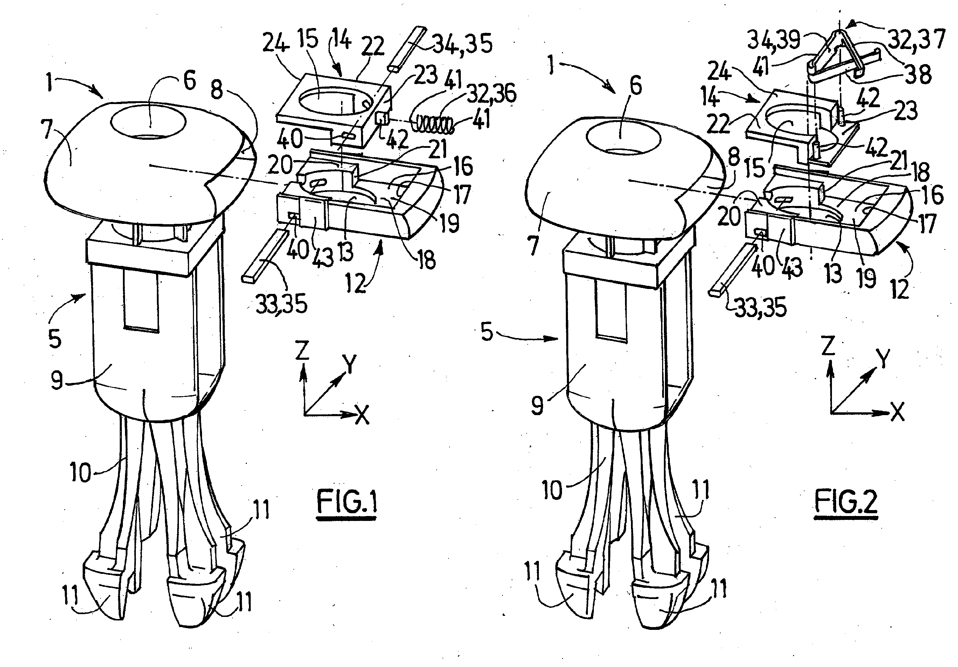

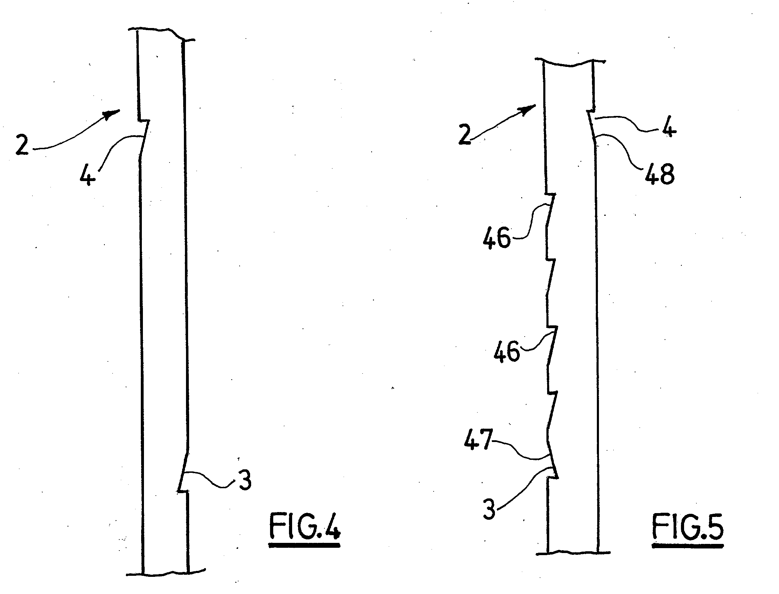

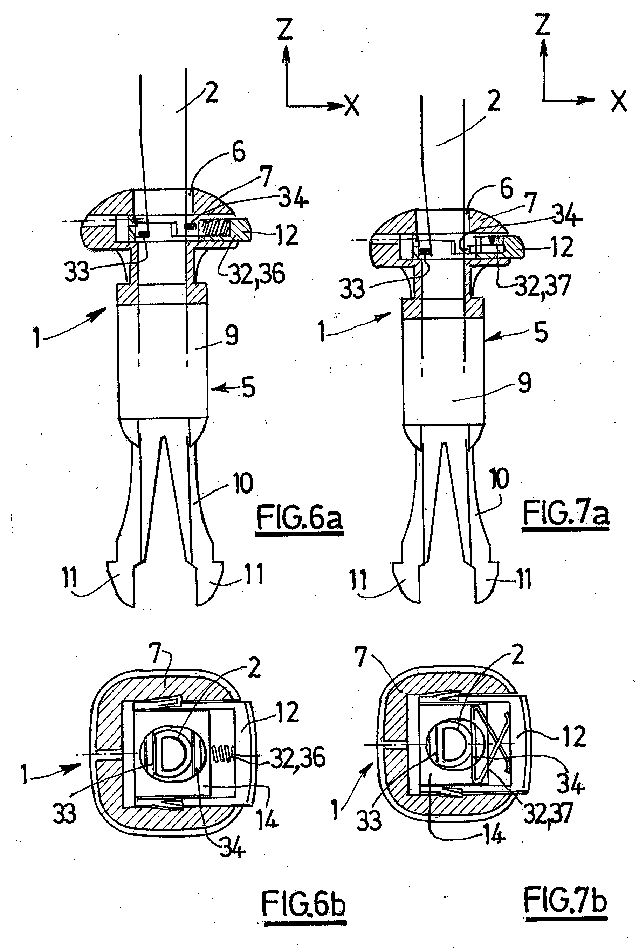

Ce système 1 est notamment représenté sur les figures 1, 2 et 3, respectivement selon un premier, un deuxième et un troisième modes de réalisation, et la tige 2 utilisée avec un tel système est représentée sur les figures 4 et 5, selon deux modes de réalisation possibles.

Cette tige 2 est pourvue d'un premier 3 et d'un deuxième 4 logements décalés axialement et s'étendant de part et d'autre de l'axe de la tige 2. Chacun de ces logements 3, 4 définit une position extrême dans laquelle la tige 2 est bloquée en translation. Entre ces deux positions extrêmes, la tige 2 peut coulisser par déplacement manuel.

Le système 1 selon l'invention comprend une gaine 5 destinée à recevoir en translation la tige 2 suivant un axe Z sensiblement colinéaire à l'axe de la tige 2. A cet effet, la gaine 5 est percée en son centre, et sur toute sa longueur, d'un orifice 6 dont la taille et la forme sont agencées pour permettre l'insertion et la translation de la tige 2.

La gaine 5 comprend une partie supérieure 7 de forme sensiblement rectangulaire, et ci-après dénommée chapeau de la gaine, dont un des côtés comprend un logement 8, dont la fonction sera indiquée plus loin.

La partie intermédiaire 9 de la gaine 5 est de forme sensiblement rectangulaire, et sa partie inférieure 10 est formée de quatre doigts 11, ces deux parties 9 et 10 étant agencées pour permettre l'intégration de ladite gaine 5 dans un appui-tête pour siège de véhicule automobile, ou dans la partie supérieure d'un dossier de siège.

Le système 1 comprend également une première pièce 12 agencée pour recevoir la tige 2 en translation. Une deuxième pièce 14 agencée pour recevoir la tige 2 en translation est également prévue. Ces deux pièces 12, 14 sont de forme complémentaires.

Selon le premier et le deuxième mode de réalisation, représentés notamment sur les figures 1 et 2, chaque pièce 12, 14 est pourvue d'un orifice 13, 15 agencé pour recevoir la tige 2 en translation.

Dans ces modes de réalisation, les deux pièces 12,14 sont de forme sensiblement rectangulaire. La première pièce 12 comprend une face intérieure 16 percée de l'orifice 13, et une paroi 17 délimitant un logement interne 18. Ce logement 18 comprend une première 19 et une deuxième 20 parties sensiblement planes qui sont décalées axialement l'une par rapport à l'autre, et qui sont séparées l'une de l'autre par une paroi radiale 21.

La deuxième pièce 14 comprend une face plane 22 percée de l'orifice 15, dont une extrémité forme une saillie 23. L'autre extrémité 24 de la deuxième pièce 14 est de forme complémentaire de la deuxième partie 20 du logement 18.

Ainsi, la deuxième pièce 14 est destinée à être disposée dans le logement 18 de la première pièce 12, la saillie 23 venant à l'intérieur du logement 18, de sorte à être mobile par rapport à la première pièce 12 suivant l'axe X, entre la paroi formant butée 17 et la paroi radiale 21.

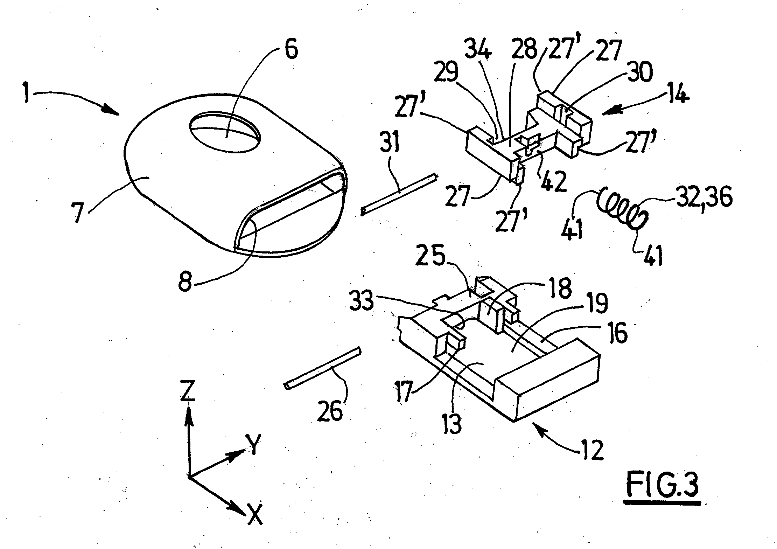

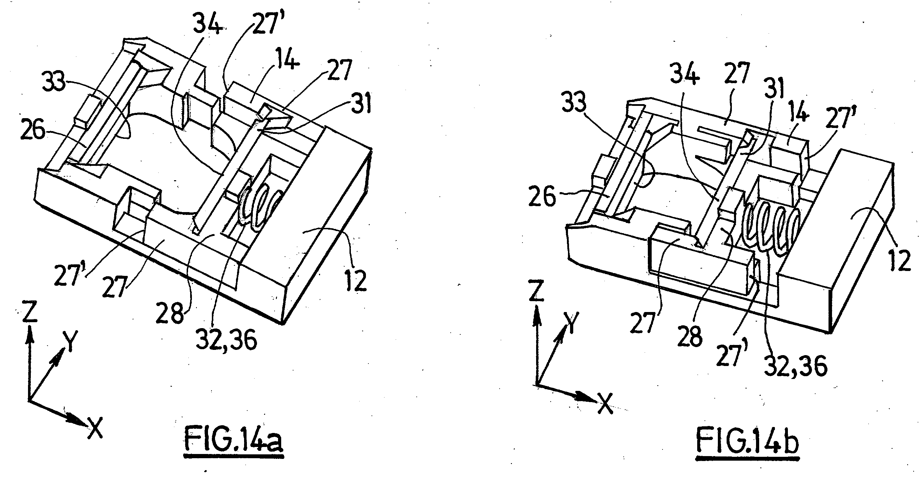

Selon un troisième mode de réalisation, représenté sur les figures 3, et 14a, 14b, la première pièce 12 est sensiblement identique à celle décrite ci-dessus en relation avec les premier et deuxième modes de réalisation. Elle comprend en outre un logement 25 destiné à recevoir un premier moyen de renfort 26 de ladite pièce 12, constitué dans l'exemple représenté, d'une tige métallique.

La deuxième pièce 14 comprend deux parties latérales 27 parallèles entre elles, et une partie centrale plane 28, perpendiculaire auxdites parties 27. La partie centrale 28 comprend un évidement 29 agencé pour recevoir la tige 2 en translation, et un logement 30 destiné à recevoir un deuxième moyen de renfort 31, également constitué, dans l'exemple représenté, d'une tige métallique.

Le système 1 selon l'invention comprend également un moyen de contrainte 32 du déplacement relatif des première 12 et deuxième 14 pièces, ainsi qu'un premier 33 et un deuxième 34 moyen de blocage de la translation de la tige 2. Le premier moyen de blocage 33, prévu sur la première pièce 12, est destiné à venir s'engager dans le premier logement 3 de la tige 2. De même, le deuxième moyen de blocage 34, prévu sur la deuxième pièce 14, est destiné à venir s'engager dans le deuxième logement 4 de la tige 2.

Le moyen de contrainte 32 est agencé pour provoquer le déplacement sélectif de l'une des deux pièces 12, 14 lorsque le moyen de blocage 33, 34 de ladite pièce est en regard du logement 3, 4 dans lequel il est destiné à s'engager.

Selon les modes de réalisation représentés, le moyen de contrainte 32 utilisé est une pièce élastiquement déformable, de sorte à pouvoir passer d'un état comprimé lorsque les moyens de blocage 33, 34 ne sont pas en regard des logements 3, 4, à un état étiré lorsque l'un des moyens de blocage 33, 34 est en regard du logement 3, 4 dans lequel il est destiné à s'engager.

Dans les deux premiers modes de réalisation, les moyens de blocage 33, 34 sont formés d'au moins une tige 35 destinée à être insérée dans l'orifice 13, 15.

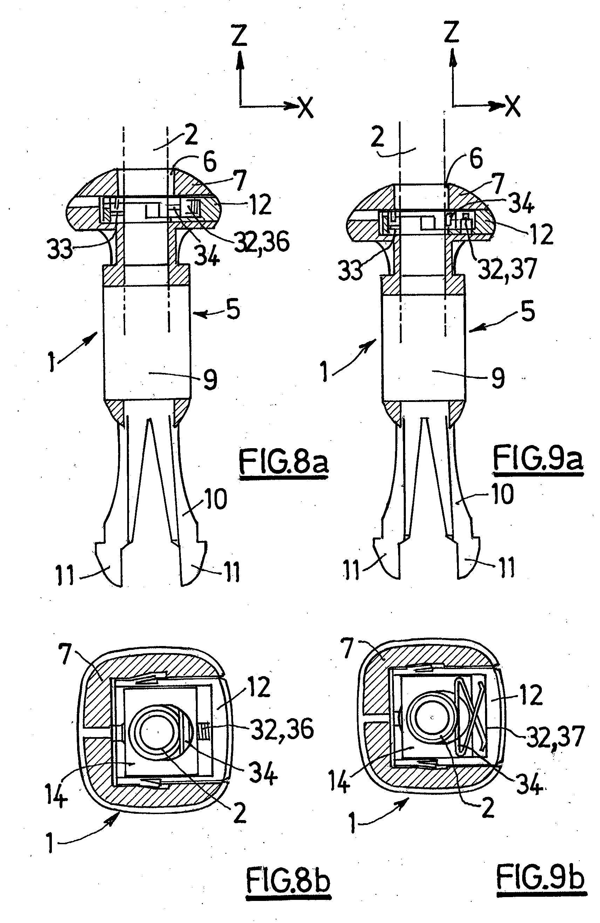

Selon le premier mode de réalisation, représenté sur les figures 1, 6, 8, 10 et 12, le moyen de contrainte 32 est un ressort hélicoïdal 36, et les moyens de blocage 33, 34 de la translation de la tige 2 sont formés chacun d'une tige 35.

Selon le deuxième mode de réalisation, représenté sur les figures 2, 7, 9, 11 et 13, le moyen de contrainte 32 est formé d'une pièce 37 comprenant deux branches 38 qui se croisent, une extrémité d'une branche 38 étant reliée à une extrémité de l'autre branche 38 par une tige transversale 39, de telle sorte que la pièce 37 présente sensiblement une forme de α. Cette tige transversale 39 forme le moyen de blocage 34 de la deuxième pièce 14, qui est donc associé au moyen de contrainte 37. Le moyen de blocage 33 de la première pièce 12 est formé d'une tige 35.

Dans ces deux modes de réalisation, les moyens de contrainte 36, 37 ainsi que les moyens de blocage 35, 39 sont métalliques, de sorte à assurer un blocage ferme de la tige 2, et la première 12 et la deuxième 14 pièces sont formées de polypropylène ou de polyamide 6,6.

Selon d'autres modes de réalisation, au moins l'un des moyens de blocage 33, 34 est formé par une partie de la circonférence de l'orifice 13, 15 dans lequel il est prévu, ladite partie s'étendant éventuellement de façon sensiblement rectiligne suivant l'axe Y. A cet effet, la pièce 12, 14 et au moins l'un des moyens de blocage 33, 34 sont formés d'une seule pièce, par exemple par moulage.

En particulier, dans le troisième mode de réalisation (figures 3, 14a et 14b), le premier 33 et le deuxième 34 moyens de blocage sont formés respectivement d'une partie de la circonférence de l'orifice 13, et d'une partie de l'évidement 29, qui s'étendent de façon sensiblement rectiligne suivant l'axe Y.

Dans ce mode de réalisation, le moyen de contrainte 32 est formé d'un ressort hélicoïdal 36 agencé pour pouvoir passer d'un état comprimé lorsque les moyens de blocage 33, 34 ne sont pas en regard des logements 3, 4 (figure 14a) à un état étiré lorsque l'un des moyens de blocage 33, 34 est en regard du logement 3, 4 dans lequel il est destiné à s'engager (figure 14b).

Dans ce mode de réalisation, le moyen de contrainte 36 et les moyens de renfort 26, 31 sont métalliques, et la première 12 et la deuxième 14 pièces, dans lesquelles sont intégrés les moyens de blocage 33, 34, sont formées de polypropylène ou de polyamide 6,6. Ainsi, ce système présente l'avantage, en cours d'utilisation, d'éviter tout phénomène de matage ou de rayures de la tige dû au contact fréquent entre la tige métallique 2 et les moyens de blocage 33, 34, et ce sans risquer la détérioration desdits moyens du fait de la présence des moyens de renfort 26, 31.

On décrit à présent le montage du système 1 selon l'invention, en relation avec les figures 1 et 2.

La deuxième pièce 14 est disposée sur la première pièce 12, de sorte que les deux orifices 13,15 soient sensiblement en regard. La forme de ces pièces 12, 14 est agencée pour que, une fois disposées l'une sur l'autre, la deuxième pièce 14 soit mobile par rapport à la première 12 suivant l'axe X.

Puis le ou les moyens de blocage 33, 34 sont insérés dans la première pièce 12 (figure 2) ou dans la première 12 et la deuxième 14 pièces (figure 1), dans des orifices 40 prévus à cet effet. Ces moyens de blocage 33, 34 s'étendent donc suivant un axe Y, formant un trièdre avec les axes X et Z. Ainsi, chaque moyen de blocage 33, 34 est prévu à l'intérieur de l'orifice 13, 15 de l'une des deux pièces 12, 14, de sorte à s'étendre à l'intérieur de l'orifice 13, 15 et au voisinage de sa périphérie.

Le moyen de contrainte 32 est ensuite inséré entre la première 12 et la deuxième 14 pièce, de telle sorte que chacune de ses extrémités 41 soit en butée respectivement contre la première 12 et la deuxième 14 pièce. Des plots de maintien 42 du moyen de contrainte 32 sont prévus sur la deuxième pièce 14.

L'ensemble formé par la première 12 et la deuxième 14 pièces, le moyen de contrainte 32 et les moyens de blocage 33, 34, une fois monté, est inséré dans le logement 8 du chapeau 7. De la sorte, la première pièce 12 est associée à la gaine 5 de façon mobile suivant l'axe X, ladite première pièce 12 comprenant éventuellement une butée 43 agencée pour limiter son déplacement en translation dans la gaine 5, et les moyens de blocage 33, 34 sont disposés de part et d'autre de l'axe Z.

Lorsque le système est formé selon le troisième mode de réalisation, son montage s'effectue de la façon suivante.

La deuxième pièce 14 est disposée sur la première pièce 12, dans le logement 18. La pièce 14 comprend des butées 27' destinées à limiter son déplacement en translation selon l'axe X, lorsqu'elle est disposée sur la première pièce 12.

Le premier 26 et le deuxième 31 moyens de renfort sont ensuite disposés respectivement sur la première 12 et la deuxième 14 pièces, dans les logements 25, 30 prévus à cet effet. Ces moyens de renfort 26, 31 s'étendent donc suivant l'axe Y.

Puis le moyen de contrainte 36 est inséré entre la première 12 et la deuxième 14 pièce, de telle sorte que chacune de ses extrémités 41 soit en butée respectivement contre la première 12 et la deuxième 14 pièces. Un plot de maintien 42 du moyen de contrainte 36 est prévu sur la deuxième pièce 14.

L'ensemble formé par la première 12 et la deuxième 14 pièces, les moyens de renfort 26, 31, le moyen de contrainte 32 et les moyens de blocage 33, 34, une fois monté, est inséré dans le logement 8 du chapeau 7.

On décrit à présent, en relation avec les figures 6 à 14, le mode de fonctionnement d'un tel système, dans lequel la tige 2 de la figure 5 est insérée, la gaine 5 étant associée à un appui-tête pour siège de véhicule automobile.

En variante, ladite gaine est prévue dans le dossier du siège.

Les deux logements 3, 4 situés sur la tige 2 définissent deux positions extrêmes de ladite tige 2, entre lesquelles celle-ci peut coulisser par déplacement manuel.

La première position extrême, représentée sur les figures 6 et 7 respectivement selon le premier et le deuxième mode de réalisation du système 1, permet le blocage de la translation de la tige 2 vers le haut, de sorte à empêcher l'extraction de l'appui-tête.

Dans cette position, le moyen de blocage 33 de la première pièce 12 est en regard du premier logement 3 de la tige 2.

Le moyen de contrainte 32 peut prendre sa position étirée, ce qui déplace la première pièce 12 en translation par rapport à la gaine 5. Ce mouvement entraîne le déplacement du premier moyen de blocage 33, associé à la première pièce 12, qui vient ainsi s'engager dans le premier logement 3, et bloquer la translation de la tige 2 vers le haut.

Dans cette position, une partie de la première pièce 12 dépasse à l'extérieur du chapeau 7 de la gaine 5. Ainsi, le désengagement du moyen de blocage 33 peut être réalisé par déplacement manuel en translation suivant l'axe X de la première pièce 12. Autrement dit, par simple pression sur la partie extérieure de la première pièce 12, un utilisateur peut déverrouiller le système 1 de sa première position extrême, et extraire l'appui-tête du siège de véhicule, si cela s'avère nécessaire.

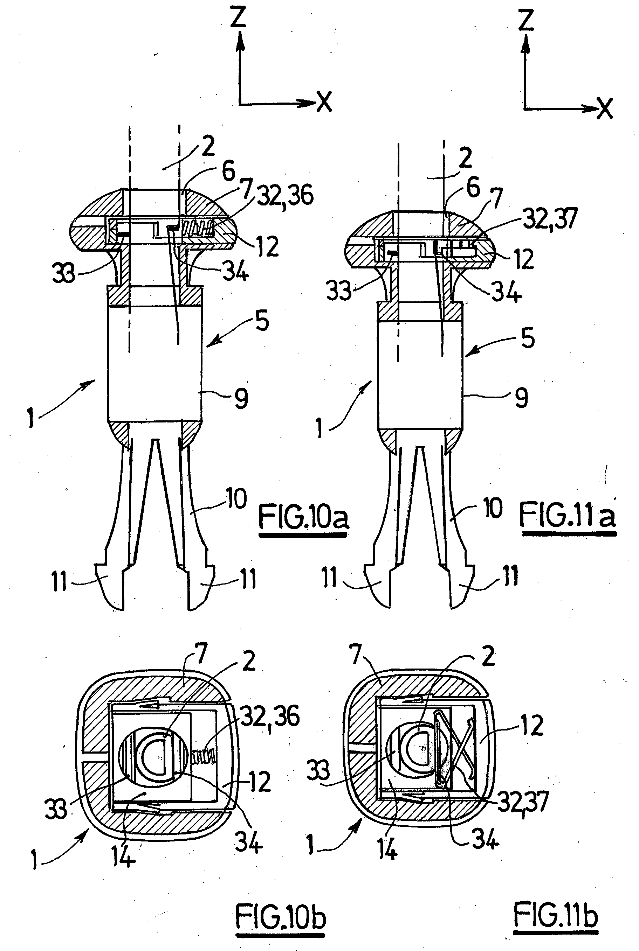

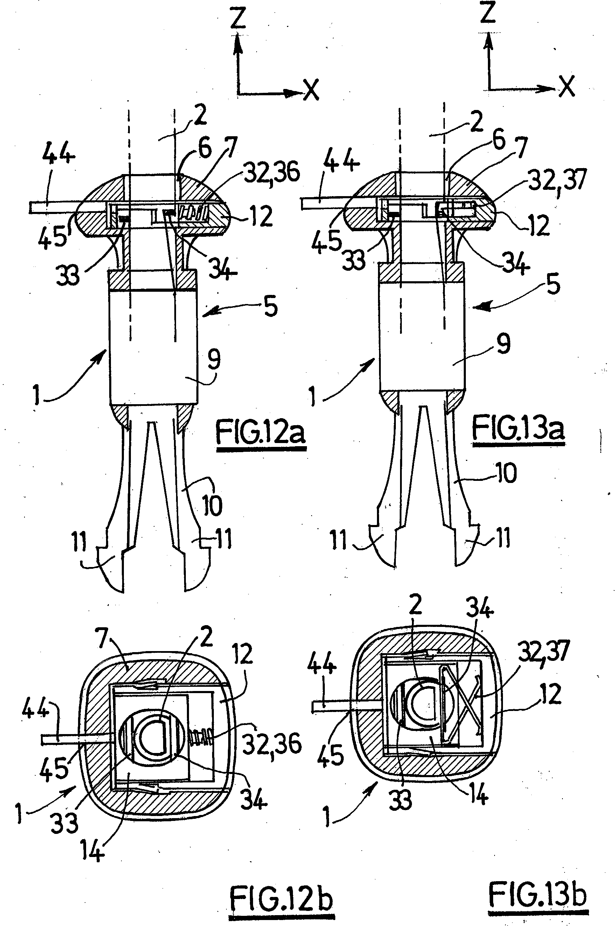

La deuxième position extrême, représentée sur les figures 10 et 11 respectivement selon le premier et le deuxième mode de réalisation, permet le blocage de la translation de la tige 2 vers le bas, de telle sorte que le déplacement de l'appui-tête vers le bas soit limité à une certaine cote.

Dans cette position, le moyen de blocage 34 de la deuxième pièce 14 est en regard du deuxième logement 4 de la tige 2.

Le moyen de contrainte 32 peut prendre sa position étirée, ce qui déplace la deuxième pièce 14 en translation par rapport à la première 12. Ce mouvement entraîne le déplacement du deuxième moyen de blocage 34, associé à la deuxième pièce 14, qui vient ainsi s'engager dans le deuxième logement 4, et bloquer la translation de la tige 2 vers le bas.

Dans cette position, la première pièce 12 est entièrement insérée dans le chapeau 7 de la gaine 5. Ainsi, un utilisateur ne pourra pas, en actionnant ledit système 1, déplacer l'appui-tête dans une position plus basse que cette deuxième position extrême, et ce pour des raisons de sécurité.

Le déverrouillage de la tige 2 vers le bas, depuis sa deuxième position extrême, ne peut être réalisé qu'à l'aide d'un outil spécifique 44 (figures 12 et 13). Cet outil est inséré dans un orifice 45 de la gaine 5 prévu à cet effet, de sorte à déplacer la deuxième pièce 14 en translation suivant l'axe X lorsque le moyen de blocage correspondant 34 est engagé dans le deuxième logement, permettant ainsi son désengagement. En pratique, cette opération est essentiellement réalisée pour faciliter le montage du siège complet dans le véhicule.

Les deux logements 3 et 4 correspondant aux deux positions extrêmes présentent un profil agencé pour permettre le désengagement du moyen de blocage 33, 34 dans le sens du coulissement.

En outre, entre ces deux positions extrêmes, un utilisateur peut, par déplacement manuel de la tige 2 vers le haut ou vers le bas, régler la position de l'appui-tête à une hauteur souhaitée.

On décrit ci-dessous un tel réglage, grâce au système selon l'invention dans lequel la tige 2 de la figure 5 est insérée, cette tige comprenant des crans 46 disposés entre le premier 3 et le deuxième 4 logement, du côté du premier logement 3, de sorte à permettre le réglage suivant Z par engagement du moyen de blocage 33 dans lesdits crans.

Lorsque l'utilisateur déplace manuellement la tige 2 en la poussant vers le bas, à partir de sa première position extrême, le premier moyen de blocage 33 suit la pente 47 du premier logement 3 de sorte à se désengager de celui-ci. Le moyen de contrainte 32 passe d'un état comprimé lorsque le moyens de blocage 33 n'est en regard d'aucun cran 46, à un état étiré lorsque le moyen de blocage 33 de la première pièce 12 se trouve en regard d'un cran 46, de telle sorte que ledit moyen 33 puisse s'engager dans ce cran 46.

De même, lorsque l'utilisateur déplace manuellement la tige 2 en la tirant vers le haut à partir de sa deuxième position extrême, le deuxième moyen de blocage 34 suit la pente 48 du deuxième logement 4 de sorte à se désengager de celui-ci, et permettre l'engagement du premier moyen de blocage 33 dans l'un des crans 46.

Le passage d'un cran 46 à un autre est réalisé en appuyant sur la première pièce 12 de sorte à lui faire effectuer une translation suivant l'axe X. Le moyen de blocage 33 qui lui est associé est alors désengagé du cran 46 précédent, laissant ainsi la tige 2 libre en translation dans les deux sens.

Le système 1 selon l'invention peut également être utilisé avec une tige 2 telle que celle représentée sur la figure 4, présentant une surface lisse entre les deux logements 3 et 4. Dans ce cas, un dispositif de réglage (non représenté) peut être utilisé de sorte à permettre, entre les deux positions extrêmes, le réglage de la tige 2 suivant l'axe Z.

## Revendications

1. Système (1) de déplacement et de blocage en translation d'une tige (2) pourvue d'un premier (3) et d'un deuxième (4) logements décalés axialement et s'étendant de part et d'autre de l'axe de la tige (2), ledit système (1) comprenant :
- une gaine (5) destinée à recevoir en translation la tige (2) suivant un axe Z sensiblement colinéaire à l'axe de la tige (2) ;
- une première pièce (12) associée à la gaine (5) de façon mobile suivant un axe X perpendiculaire à l'axe Z, ladite pièce (12) étant agencée pour recevoir la tige (2) en translation ;
- un premier moyen de blocage (33) s'étendant suivant un axe Y formant un trièdre avec les axes X et Z, et destiné à venir s'engager dans le premier logement (3), ledit moyen (33) étant associé à la première pièce (12) ;
- une deuxième pièce (14) mobile par rapport à la première pièce (12) suivant l'axe X, ladite deuxième pièce (14) étant agencée pour recevoir la tige (2) en translation ;
- un deuxième moyen de blocage (34) s'étendant suivant l'axe Y et destiné à venir s'engager dans le deuxième logement (4), ledit moyen (34) étant associé à la deuxième pièce (14), ladite deuxième pièce (14) étant disposée sur la première pièce (12) de sorte que les deux moyens de blocage (33, 34) soient disposés de part et d'autre de l'axe Z ;
- un moyen de contrainte (32) du déplacement relatif des première (12) et deuxième (14) pièces qui est agencé pour provoquer le déplacement sélectif de l'une des deux pièces (12, 14) lorsque le moyen de blocage (33, 34) de ladite pièce (12, 14) est en regard du logement (3, 4) dans lequel il est destiné à s'engager.

2. Système selon la revendication 1, **caractérisé en ce que** le moyen de contrainte (32) est une pièce élastiquement déformable, dont chaque extrémité (41) est en butée respectivement contre la première (12) et la deuxième (14) pièce, ladite pièce (32) étant agencée pour passer d'un état comprimé lorsque les moyens de blocage (33, 34) ne sont pas en regard des logements (3, 4), à un état étiré lorsque l'un des moyens de blocage (33, 34) est en regard du logement (3, 4) dans lequel il est destiné à s'engager.

3. Système selon la revendication 2, **caractérisé en ce que** le moyen de blocage (34, 39) de la deuxième pièce (14) est associé au moyen de contrainte (32, 37).

4. Système selon la revendication 2 **caractérisé en ce que** le moyen de contrainte (32) est un ressort hélicoïdal (36).

5. Système selon l'une des revendications 1 à 4, **caractérisé en ce qu'**au moins l'un des moyens de blocage (33, 34) est formé d'une seule pièce avec la pièce (12, 14) correspondante.

6. Système selon la revendication 5, **caractérisé en ce que** la partie de la pièce (12, 14) formant moyen de blocage (33, 34) s'étend sensiblement de façon rectiligne suivant l'axe Y.

7. Système selon la revendication 6, **caractérisé en ce qu'**un moyen de renfort (26, 31) est associé à la pièce (12, 14) au voisinage de ladite partie.

8. Système selon l'une des revendications 1 à 4, **caractérisé en ce qu'**au moins l'un des moyens de blocage (33, 34) est formé d'une tige (35) insérée dans un orifice (13, 15) prévu dans la pièce correspondante (12, 14), de sorte à s'étendre à l'intérieur dudit orifice (13, 15) et au voisinage de sa périphérie.

9. Système selon l'une des revendications 1 à 8, **caractérisé en ce que** la gaine (5) est munie d'un orifice (45) destiné à recevoir un outil (44) permettant le déplacement de la deuxième pièce (14) lorsque le moyen de blocage correspondant (34) est engagé dans le deuxième logement (4), de sorte à permettre son désengagement.

10. Système selon l'une des revendications 1 à 9, **caractérisé en ce que** la première pièce (12) comprend une butée (43) agencée pour limiter son déplacement en translation dans la gaine (5).

11. Application d'un système selon l'une des revendications 1 à 10 au blocage d'une tige (2) dans deux positions extrêmes définies par les deux logements (3, 4), ladite tige (2) pouvant coulisser entre ces deux positions extrêmes par déplacement manuel.

12. Application selon la revendication 11, **caractérisé en ce que** les logements (3, 4) présentent un profil agencé pour permettre le désengagement du moyen de blocage (33, 34) dans le sens du coulissement.

13. Application selon la revendication 11 ou 12, **caractérisée en ce que** la surface de la tige (2) est lisse entre les deux logements (3, 4), et **en ce qu'**un dispositif de réglage est utilisé de sorte à permettre, entre les deux positions extrêmes, le réglage de ladite tige (2) suivant Z.

14. Application suivant la revendication 11 ou 12, **caractérisée en ce que** des crans (46) sont disposés entre le premier (3) et le deuxième (4) logement, du côté du premier logement (3), de sorte à permettre, entre les deux positions extrêmes, le réglage de ladite tige suivant Z par engagement du premier moyen de blocage (33) dans lesdits crans (46).

15. Application suivant la revendication 14, **caractérisée en ce que** le désengagement du premier moyen de blocage (33) est réalisé par déplacement manuel en translation suivant l'axe X de la première pièce (12).

16. Application suivant l'une des revendications 11 à 15, **caractérisée en ce que** la tige (2) est associée à un appui-tête pour siège de véhicule automobile, ledit système (1) étant prévu dans le dossier du siège.

17. Application selon l'une des revendications 11 à 15, **caractérisée en ce que** la tige (2) est associée à un appui-tête pour siège de véhicule automobile, ledit système (1) étant prévu dans l'appui-tête.
